# EUROPEAN PATENT APPLICATION

(11) **EP 4 538 677 A1**
(43) Date of publication of application: **16.04.2025**
(21) Application number: 23202340.8
(22) Date of filing: 09.10.2023
(51) Int. Cl.: G01N 15/1433, G01N 15/14, B01L 3/00, G01N 15/10

(54) **SYSTEM AND METHOD FOR LABEL-FREE CELL IDENTIFICATION AND/OR CLASSIFICATION AND/OR SELECTION**

(71) Applicant: IMEC VZW, 3001 Leuven (BE)
(72) Inventor: Adams, Christopher, Hethersgill, CA6 6HA (GB); Peumans, Peter, 1540 Herfelingen (BE); Jayapala, Murali, 3010 Kessel-Lo (BE); Lambrechts, Andy, 3020 Herent (BE); Stakenborg, Tim, 3001 Herverlee (BE)
(74) Representative: Körfer, Thomas

(57) **Abstract**

A system (10) for label-free identification and/or classification and/or selection of at least one cell is provided. Said system (10) comprises a microfluidic environment (11) configured to be traversable by the at least one cell, an imaging sensor configured to gather imaging information with respect to at least a part of the microfluidic environment (11), and a processing unit connected to the imaging sensor. In this context, the microfluidic environment (11) comprises at least one sub-environment (12) configured to interact with the at least one cell. Furthermore, the processing unit is configured to detect at least one sub-environment interaction event based on persistence of the at least one cell imaged by the imaging sensor in the temporal domain. In addition to this, the processing unit is configured to identify and/or classify and/or select the at least one cell based on the at least one sub-environment interaction event.

## Description

The present invention relates to a label-free system and method for identifying and/or classifying and/or selecting cell type(s) based on persistent cell-biofunctionalized surface interaction events.

Identification, classification and selection of subpopulations of cells is an important tool for various clinical and research applications such as Cell and Gene Therapy.

For instance, the presence of certain cell types in a biological sample (e.g. bodily fluid, tissue, etc.) may be indicative of certain conditions, disorders, diseases etc. or it may be required to isolate cells for research purposes.

Current techniques can be separated into methods requiring differential labeling of the cells, e.g. with antibodies or fluorescent tags, and label-free methods based on differences in the physical properties of the cells.

Computational microscopy enables detailed label-free studies of large cell populations through a large field of visualization. The information gathered is commonly used for inference of multiple cell features including health, size, shape and cell behavior such as cell velocity in surface modified microfluidic channels.

While traversing the channel, the cell can interact with the surface and this interaction causes perturbation in the trajectory resulting in measurable velocity of the cell. The specific features of such velocity change are label-free indicative of markers specific to the cell and the surface coatings which the cell interacts with.

Known label-free cell identification and/or classification and/or selection systems such as lens-free-imager-velocity-based measurements or machine-learning/deep-learning based techniques (segmentation techniques), require precise and careful determination of cell movement across a pixelated sensor (calculated in real-time) to determine interaction events. In these systems, cell-surface interaction, is derived as a rate of change of cell velocity in the spatial domain requiring detailed information from every pixel-cell correlation. Based on a series of parameters computed from the cellular rate of change, a velocity vector is calculated with inference about possible interaction events.

WO 2013/049860 A1 describes a method to separate cells based on their attraction to 3D structures protruding from a flow cell channel covered with adhesion entities. An interaction between cells in a fluid flowing through the flow cell and adhesive entities on the protrusions alters the cell's trajectory relative to the initial streamline. The system according to WO 2013/049860 A1 is designed to alter the trajectory of a flowing cell through contact with one or more adhesion entities with which the cell interacts and which are associated with part or all of a surface over which the cell is flowed. Target cell interactions with cell adhesion entities result in cell rolling of target cells along an altered trajectory.

The present invention relates to a system and method overcoming the limitations of known cell tracking classification systems requiring prior knowledge of the position of a cell in the microfluidic chamber, i.e. the trajectory of the cell or the velocity vector information.

In the system according to the present invention, the persistence of a cell imaged at a sensor in the temporal domain as opposed to the spatial domain defines interaction events with a biofunctionalized surface, e.g. cell-antibody, cell-antigen, cell-protein, cell-aptamer etc. interaction. The label-free detection method according to the present invention is based on the persistence of cells on a discrete array of pixel sensors. An increase of dwell time, i.e. persistence, can be directly correlated to an interaction between a cell and a biofunctionalized surface, for instance antibodies, (surface) proteins, aptamers etc. In other words, the increase of dwell time, i.e. persistence, is an indicator of the presence of a specific surface protein or cell type.

Threshold calculations, where the persistent or integrated light intensity at the pixel is an indicator of a cell-biofunctionalized surface interaction, allow the threshold detection of cell-biofunctionalized surface interaction from a small, localized cluster of pixels.

This simplifies cell-biofunctionalized surface interaction detection as threshold detection, while removing reliance on reconstructed and computed velocity vector information associated with cellular trajectory across the image sensor, i.e. the computational burden of deriving trajectory-based information from cellular imaging systems is removed.

The system and method according to the present invention enables higher throughput with minimal processing steps and allows the identification and/or classification and/or selection of a subpopulation of cells from a larger sample.

According to a first aspect of the invention, the above-mentioned system for label-free identification and/or classification and/or selection of at least one cell is provided. Said system comprises a microfluidic environment configured to be traversable by the at least one cell, an imaging sensor configured to gather imaging information with respect to at least a part of the microfluidic environment, and a processing unit connected to the imaging sensor. In this context, the microfluidic environment comprises at least one sub-environment configured to interact with the at least one cell. Furthermore, the processing unit is configured to detect at least one sub-environment interaction event based on persistence of the at least one cell imaged by the imaging sensor in the temporal domain. In addition to this, the processing unit is configured to identify and/or classify and/or select the at least one cell based on the at least one sub-environment interaction event.

Advantageously, not only higher throughput with minimal processing steps is enabled but it is also allowed for the identification and/or classification and/or selection of a subpopulation of cells from a larger sample in particularly simple, and thus efficient, manner.

According to an implementation form of the first aspect of the invention, the at least one sub-environment is at least partly biofunctionalized. In addition to this or as an alternative, the at least one sub-environment comprises at least one antibody and/or at least one antigen and/or at least one protein and/or at least one aptamer. Advantageously, for instance, a desired interaction of the at least one sub-environment with the at least one cell can efficiently be adjusted.

According to a further implementation form of the first aspect of the invention, the microfluidic environment and/or the at least one sub-environment comprises or is at least one microfluidic channel and/or at least one microfluidic chamber. Advantageously, for example, ease of manufacture can be ensured in an efficient manner.

According to a further implementation form of the first aspect of the invention, the at least one sub-environment comprises at least one biofunctionalized surface. In addition to this or as an alternative, the at least one sub-environment comprises at least one surface coated with at least one antibody and/or at least one antigen and/or at least one protein and/or at least one aptamer. Advantageously, for instance, complexity can further be reduced, thereby increasing efficiency.

According to a further implementation form of the first aspect of the invention, the at least one sub-environment comprises at least one element, preferably at least one cylindrical element, more preferably at least one surface obstacle or pillar, most preferably multiple elements and/or cylindrical elements and/or surface obstacles and/or pillars, being biofunctionalized and/or coated with at least one antibody and/or at least one antigen and/or at least one protein and/or at least one aptamer. Advantageously, for example, a desired interaction of the at least one sub-environment with the at least one cell can efficiently be adjusted especially by the number of biofunctionalized elements.

With respect to the above-mentioned term "element", it is noted that it might be particularly advantageous if said term is understood as "obstacle" especially in the corresponding flow through the at least one sub-environment.

It is further noted that said obstacle can comprise or be a surface obstacle. Such an obstacle or surface obstacle, respectively, can comprise or be of a conic shape, cylindrical shape, triangular shape, semispherical shape, teardrop shape, star shape, or any combination thereof.

Accordingly, it might be particularly advantageous if the at least one sub-environment comprises at least one obstacle especially in the corresponding flow through the at least one sub-environment, preferably at least one cylindrical obstacle especially in the corresponding flow through the at least one sub-environment, more preferably at least one surface obstacle or pillar especially in the corresponding flow through the at least one sub-environment, most preferably multiple obstacles especially in the corresponding flow through the at least one sub-environment and/or cylindrical obstacles especially in the corresponding flow through the at least one sub-environment and/or surface obstacles especially in the corresponding flow through the at least one sub-environment and/or pillars especially in the corresponding flow through the at least one sub-environment, being biofunctionalized and/or coated with at least one antibody and/or at least one antigen and/or at least one protein and/or at least one aptamer.

It is further noted that it might be particularly advantageous if this understanding of the term "element" analogously applies for all the explanations below.

According to a further implementation form of the first aspect of the invention, the at least one sub-environment comprises a sub-environment portion with at least partly biofunctionalization and/or at least one antibody and/or at least one antigen and/or at least one protein and/or at least one aptamer. Furthermore, the at least one sub-environment comprises at least one further sub-environment portion with at least one further at least partly biofunctionalization and/or at least one further antibody and/or at least one further antigen and/or at least one further protein and/or at least one further aptamer. Advantageously, for instance, at least two different desired interactions of the at least one sub-environment with the at least one cell can be adjusted in a simple, and thus efficient, manner.

According to a further implementation form of the first aspect of the invention, the at least one cell comprises or is a subpopulation of cells from a corresponding population sample. Advantageously, for example, various clinical and research applications, such as cell and gene therapy, can efficiently be simplified.

According to a further implementation form of the first aspect of the invention, the persistence comprises or is dwell time of the at least one cell with respect to the microfluidic environment or the at least one sub-environment especially caused by interaction of the at least one cell with the at least one sub-environment. Advantageously, for instance, an increase of dwell time, and therefore of persistence, can be directly correlated to an interaction between the at least one cell and a biofunctionalized surface.

According to a further implementation form of the first aspect of the invention, the imaging sensor comprises or is an array of pixels. In addition to this or as an alternative, the processing unit is configured to determine the persistence, especially the dwell time according to the implementation form above, of the at least one cell by integrating at least one corresponding value, preferably at least one corresponding light intensity, on a single pixel or a cluster of pixels of the imaging sensor. Advantageously, for example, each pass of the at least one cell over a corresponding pixel causes a measurable change in the respective pixel value.

According to a further implementation form of the first aspect of the invention, the processing unit is configured to control the respective pixel poll time and/or integration time with respect to the single pixel or the cluster of pixels of the imaging sensor. Advantageously, for instance, inefficiencies or inaccuracies, respectively, can easily be reduced.

According to a further implementation form of the first aspect of the invention, the processing unit is configured to detect the at least one sub-environment interaction event in the case that the at least one corresponding integrated value, preferably the at least one corresponding integrated light intensity, on the single pixel or the cluster of pixels of the imaging sensor exceeds a defined threshold. Advantageously, for example, persistence may not be defined by time but imaged frames more directly. Further advantageously, the threshold or the defined threshold, respectively, can comprise or be the number of integrated frames or the number of integrated imaged frames, respectively.

According to a further implementation form of the first aspect of the invention, the system is used in the context of microscopy, especially computational microscopy. Advantageously, for instance, a targeted cell selection can efficiently be enabled.

According to a second aspect of the invention, the above-mentioned method for label-free identification and/or classification and/or selection of at least one cell is provided. Said method, especially using the system according to the first aspect of the invention or any of its implementation forms, respectively, comprises the steps of providing a microfluidic environment comprising at least one sub-environment configured to interact with the at least one cell such that the at least one cell traverses said microfluidic environment, gathering imaging information with respect to at least a part of the microfluidic environment especially with the aid of an imaging sensor, detecting at least one sub-environment interaction event based on persistence of the at least one cell imaged, preferably by the imaging sensor, in the temporal domain especially with the aid of a processing unit preferably connected to the imaging sensor, and identifying and/or classifying and/or selecting the at least one cell based on the at least one sub-environment interaction event especially with the aid of the processing unit.

Advantageously, not only higher throughput with minimal processing steps is enabled but it is also allowed for the identification and/or classification and/or selection of a subpopulation of cells from a larger sample in particularly simple, and thus efficient, manner.

According to an implementation form of the second aspect of the invention, the persistence comprises or is dwell time of the at least one cell with respect to the microfluidic environment or the at least one sub-environment especially caused by interaction of the at least one cell with the at least one sub-environment. In addition to this or as an alternative, the method further comprises the step of determining the persistence, especially said dwell time, of the at least one cell by integrating at least one corresponding value, preferably at least one corresponding light intensity, on a single pixel or a cluster of pixels of the imaging sensor especially with the aid of the processing unit. Advantageously, for instance, each pass of the at least one cell over a corresponding pixel causes a measurable change in the respective pixel value.

According to a further implementation form of the second aspect of the invention, the method further comprises the step or steps of controlling the respective pixel poll time and/or integration time with respect to the single pixel or the cluster of pixels of the imaging sensor especially with the aid of the processing unit, and/or detecting the at least one sub-environment interaction event in the case that the at least one corresponding integrated value, preferably the at least one corresponding integrated light intensity, on the single pixel or the cluster of pixels of the imaging sensor exceeds a defined threshold especially with the aid of the processing unit. Advantageously, for example, persistence may not be defined by time but imaged frames more directly. Further advantageously, the threshold or the defined threshold, respectively, can comprise or be the number of integrated frames or the number of integrated imaged frames, respectively.

Exemplary embodiments of the invention are now further explained with respect to the drawings by way of example only, and not for limitation. In the drawings:
- Fig. 1: shows an exemplary embodiment of the system for label-free identification and/or classification and/or selection of at least one cell;
- Fig. 2A: shows a further embodiment of the first aspect of the invention exemplarily without interaction of cells;
- Fig. 2B: shows the embodiment according to Fig. 2A exemplarily with interaction of cells; and
- Fig. 3: shows a flow chart of an exemplary embodiment of the second aspect of the invention.

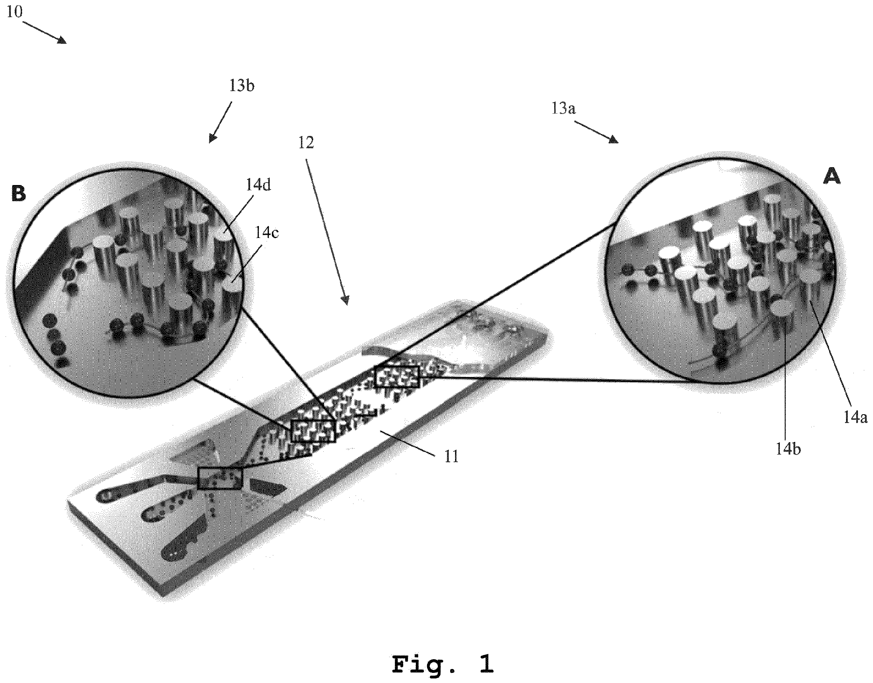

With respect to Fig. 1, an exemplary embodiment of a system 10 for label-free identification and/or classification and/or selection of at least one cell is illustrated. Said system 10 comprises a microfluidic environment 11 configured to be traversable by the at least one cell which is not explicitly equipped with a reference sign in this exemplary case.

Furthermore, the system 10 comprises an imaging sensor configured to gather imaging information with respect to at least a part of the microfluidic environment 11. It is noted that said imaging sensor is not explicitly shown in Fig. 1. In addition to this, the system 10 comprises a processing unit connected to the imaging sensor. By analogy with the imaging sensor, said processing unit is also not explicitly depicted in Fig. 1.

In accordance with Fig. 1, the microfluidic environment 11 comprises at least one sub-environment, exemplarily the sub-environment 12 configured to interact with the at least one cell. In this context, the processing unit is configured to detect at least one sub-environment interaction event based on persistence of the at least one cell imaged by the imaging sensor in the temporal domain. Additionally, the processing unit is configured to identify and/or classify and/or select the at least one cell based on the at least one sub-environment interaction event.

Advantageously, the respective trajectory of the at least one cell or the corresponding velocity vector information is no longer relevant. Further advantageously, no prior knowledge of the position of the at least one cell in the microfluidic environment is required. Accordingly, reliance on fully reconstructed and computed velocity vector information associated with cellular trajectory across the image sensor can be removed.

With respect to the sub-environment 12, it is noted that said sub-environment 12 is at least partly biofunctionalized. For instance, the sub-environment 12 can comprise at least one antibody and/or at least one antigen and/or at least one protein and/or at least one aptamer. Furthermore, with respect to the microfluidic environment, it is noted that said microfluidic environment 11 exemplarily comprises a microfluidic channel.

Moreover, with special respect to the above-mentioned biofunctionalization of the sub-environment 12, it is noted that in this exemplary case according to Fig. 1, the sub-environment 12 comprises antibody-coated surface obstacles or pillars 14a, 14b, 14c, 14d. Accordingly, the above-mentioned microfluidic channel comprises said antibody-coated surface obstacles or pillars 14a, 14b, 14c, 14d.

With respect to the above-mentioned surface obstacles or pillars 14a, 14b, 14c, 14d, it is noted that at least a part or each of said surface obstacles or pillars 14a, 14b, 14c, 14d can comprise or be of a conic shape, cylindrical shape, triangular shape, semispherical shape, teardrop shape, star shape, or any combination thereof.

As it can further be seen from Fig. 1, the sub-environment 12 or the microfluidic channel, respectively, comprises a first sub-environment portion 13a or a first microfluidic channel portion, respectively, and a second sub-environment portion 13b or a second microfluidic channel portion, respectively.

Said first sub-environment portion 13a or said first microfluidic channel portion, respectively, comprises a first group of antibody-coated surface obstacles or pillars, namely group "A", said first group exemplarily comprising the above-mentioned antibody-coated surface obstacles or pillars 14a, 14b. Said second sub-environment portion 13b or said second microfluidic channel portion, respectively, comprises a second group of antibody-coated surface obstacles or pillars, namely group "B", said second group exemplarily comprising the above-mentioned antibody-coated surface obstacles or pillars 14c, 14d. With respect to said first group and said second group, it is noted that in each group of antibody-coated surface obstacles or pillars, a specific type of antibody is chosen.

Accordingly, it is further noted that it might be particularly advantageous if the sub-environment 12 or the microfluidic channel, respectively, comprises a first group of elements or surface obstacles or pillars, respectively, comprising and/or coated with first biofunctionalizing means and at least one second group of elements or surface obstacles or pillars, respectively, comprising and/or coated with at least one second biofunctionalizing means.

With respect to the above-mentioned at least one cell, it is noted that said at least one cell can comprise or be a subpopulation of cells from a corresponding population sample.Furthermore, with respect to the above-mentioned persistence, it is noted that said persistence may comprise or be dwell time of the at least one cell with respect to the microfluidic environment 11 and/or the sub-environment 12 or the microfluidic channel, respectively, especially caused by interaction of the at least one cell with the sub-environment 12 or the microfluidic channel.

In particular, in accordance with this exemplary case as illustrated by Fig. 1, said persistence may comprise or be the dwell time of the at least one cell with respect to the microfluidic environment 11 and/or the sub-environment 12 or the microfluidic channel, respectively, caused by interaction of the at least one cell with the first group of elements or surface obstacles or pillars, respectively, exemplarily group "A" of antibody-coated surface obstacles or pillars, and/or at least one second group of elements or surface obstacles or pillars, respectively, exemplarily group "B" of antibody-coated surface obstacles or pillars.

Moreover, with respect to the imaging sensor, it is noted that the imaging sensor can comprise or be an array of pixels. It is further noted that said imaging sensor can comprise or be a charge-coupled device sensor.

Furthermore, the processing unit may be configured to determine the persistence, especially the above-mentioned dwell time, of the at least one cell by integrating at least one corresponding value, preferably at least one corresponding light intensity, on a single pixel or a cluster of pixels of the imaging sensor.

Advantageously, cell interaction with elements or surface obstacles or pillars, respectively, coated with biofunctionalizing means, such as antibody, antigen, protein and/or aptamer, can be derived through integrated pixel binning in the time domain especially as opposed to spatial domain.

Accordingly, especially in the context of detecting the at least one sub-environment interaction event based on persistence of the at least one cell imaged by the imaging sensor in the temporal domain, the processing unit may be configured to derive said at least one sub-environment interaction event through integrated pixel binning in the temporal domain especially as opposed to spatial domain.

It might be particularly advantageous if the processing unit is configured to control the respective pixel poll time and/or integration time with respect to the single pixel or the cluster of pixels of the imaging sensor. Especially in this context, the processing unit may be configured to detect the at least one sub-environment interaction event in the case that the at least one corresponding integrated value, preferably the at least one corresponding integrated light intensity, on the single pixel or the cluster of pixels of the imaging sensor 24 exceeds a defined threshold.

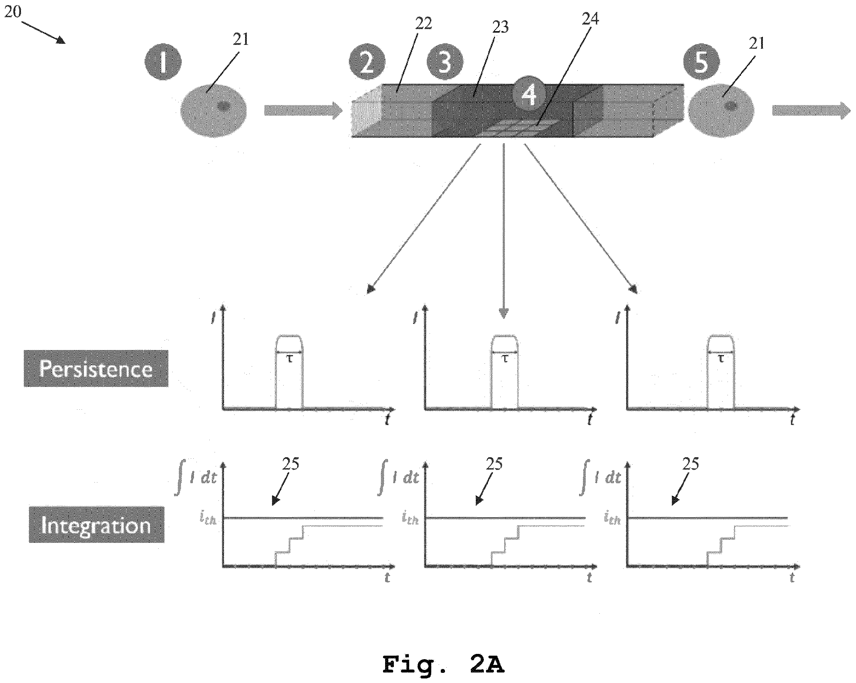

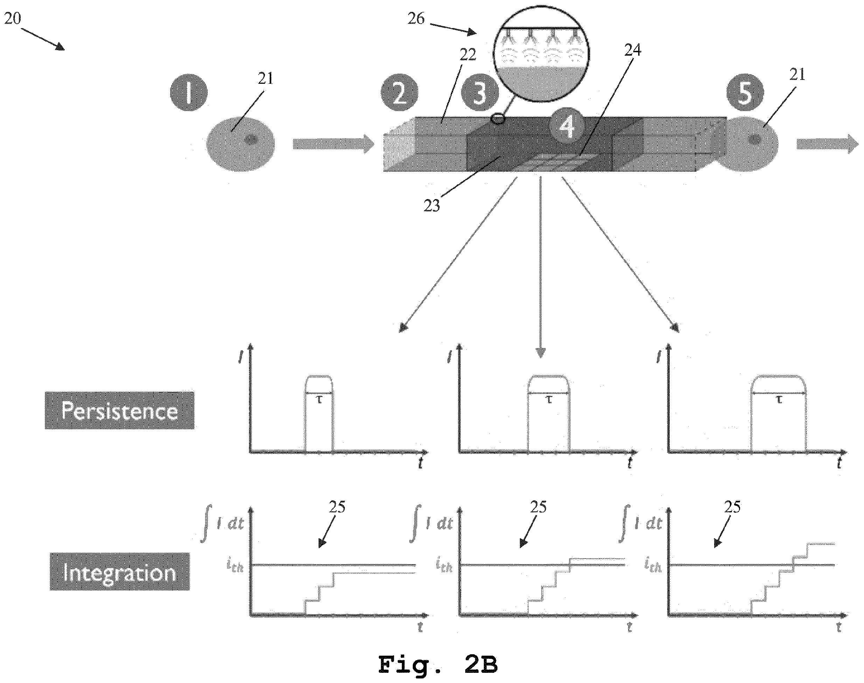

With respect to the system 10 of Fig. 1 or the below-explained system 20 according to Fig. 2A and Fig. 2B, respectively, it is noted that it might be particularly advantageous if said system 10 or said system 20, respectively, is used in the context of microscopy, especially computational microscopy.

Now, with respect to the system 20 of Fig. 2A or Fig. 2B, respectively, it is noted that the illustration according to Fig. 2A differs from the one of Fig. 2B especially in that the in the case of Fig. 2A, there is no interaction of cells with biofunctionalized surfaces and/or elements and/or surface obstacles and/or pillars of the system 20, whereas Fig. 2B illustrates the case of interaction of cells.

By analogy with the system 10 of Fig. 1, the system 20 for label-free identification and/or classification and/or selection of at least one cell, said at least one cell being explicitly shown in this exemplary case and equipped with reference sign 21, comprises a microfluidic environment 22 configured to be traversable by the at least one cell 21, an imaging sensor, said imaging sensor being explicitly depicted in this exemplary case and equipped with reference sign 24, configured to gather imaging information with respect to at least a part of the microfluidic environment 22. Additionally, the system 20 comprises a processing unit, which is not explicitly shown in analogy to Fig. 1, connected to the imaging sensor 24.

Further in analogy to Fig. 1, the microfluidic environment 22 comprises at least one sub-environment or the sub-environment 23, respectively, configured to interact with the at least one cell 21. Furthermore, as already mentioned in the context of Fig. 1, the processing unit is configured to detect at least one sub-environment interaction event based on persistence of the at least one cell 21 imaged by the imaging sensor 24 in the temporal domain. In addition to this, the processing unit is configured to identify and/or classify and/or select the at least one cell 21 based on the at least one sub-environment interaction event.

Accordingly, it is noted that the all the explanations above regarding the system 10 of Fig. 1 can analogously apply for the system 20 of Fig. 2A or Fig. 2B, respectively, and vice versa. In the context of Fig. 2A or Fig. 2B, respectively, it is noted that especially the corresponding working principle of the system 20 is elucidated in greater detail in the following.

Basically, label-freeness in the sense of the invention is based on the persistence of cells, such as the at least one cell 21, on a discrete array of pixel sensors, such as the imaging sensor 24. An increase of dwell time, and therefore of persistence, can be directly correlated to an interaction between a cell and a biofunctionalized surface. It is an indicator of the presence of a specific surface protein, and more extensively of the cell type.

As the imaging sensor 24 is a discrete array of pixel sensors, each pass of a cell or the at least one cell 21, respectively, over a pixel causes a measurable change in the corresponding pixel value dependent on the integration time of the pixel binning. Accordingly, where the at least one cell 21 crosses the pixels in a linear manner at a constant velocity, one can expect the value of the pixel readout to be similar within manufacturing tolerances.

Furthermore, where the corresponding trajectory across the imaging sensor 24 is delayed through some form of label-free interaction, one can expect the total integrated value to be reflected by the dwell time of the at least one cell 21 above the imaging sensor surface. It is noted that it might be particularly advantageous if the imaging sensor 24 is arranged such that the at least one cell 21 traverses over or above at least a part of the surface, especially the photosensitive surface, of the imaging sensor 24.

Moreover, the integrated value on a single pixel or a cluster, especially a pre-defined cluster, respectively, of pixels is the measure of the dwell time of a cell, and this is exploited here where upon antibody coating for example, the dwell time would be higher for a specific label-free cell-antibody interaction.

Advantageously, it is this increase in dwell time that would be used as the inference of a targeted positive label-free cell identification and/or classification and/or selection. Further advantageously, especially by controlling of the pixel poll time and/or integration time of the real measured pixel value preferably with the aid of the processing unit, cells or the at least one cell 21, respectively, can be identified and/or classified and/or selected without prior knowledge of position in the flow cell(s).

Furthermore, it might be particularly advantageous if the above-mentioned persistence is not defined by time but imaged frames, especially the number of imaged frames preferably by the imaging sensor 24. Advantageously, one can still obtain very fast readout of persisting events if one has high frame rates. For example, if one deems a threshold to be significant after three integrated frames from a single pixel, then depending on the frame rate of the imaging sensor 24 and/or poll rate of the corresponding pixel, this could be tens, hundreds or thousands of readouts or events, respectively, per second.

As it can further be seen from Fig. 2A or 2B, respectively, especially from the encircled numbers 1 to 5 thereof, the corresponding workflow goes as follows:
In accordance with the encircled number 1, a target cell or the at least one cell 21 is given. According to the encircled number 2, said cell 21 enters the microfluidics setup or the microfluidic environment 22 of the system 20, respectively.

Thereafter, in accordance with the encircled number 3, the cell 21 interacts (Fig. 2B) or not (Fig. 2A) with the sub-environment 23, exemplarily biofunctionalized or antibody-coated surfaces especially of a microfluidic channel.

Further, according to the encircled number 4, the presence of the cell 21 is detected by the sensing pixel array or the imaging sensor 24, respectively.

If no interaction has been occurring as illustrated by Fig. 2A, then the successive sensors or pixels, respectively, detect the same number of frames, and the integrated values remain below the threshold level, said threshold being exemplarily equipped with reference sign 25.

In the opposite scenario as illustrated by Fig. 2B, the persistence gets longer and the integrated values exceed the defined threshold 25, which indicates the presence of an interaction.

Moreover, in accordance with the encircled number 5, the cell 21 leaves the microfluidic environment 22, which can exemplarily be a quality control area, and may optionally enter a quality control area for other markers of interest or a further microfluidic environment.

In the following, especially in addition or as an alternative to the above-mentioned use of the system 10 or system 20, respectively, in the context of microscopy, especially computational microscopy, some further use cases are discussed.

For some applications, cells could be required to adhere to a surface for long periods of time and as such the systems 10 and 20 easily identify these cells. For instance, the system 10 or the system 20, respectively, can be used as a quality control system, especially a cell and gene therapy quality control system.

For some other applications, owing to lack of upstream velocity tracking, the speed of any required compute cycles can be significantly quicker as no specific cellular information would be required (for example, reconstructed form of the cell) as the persistence of any object over the surface of the pixelated sensor, even interference patterns would signal the presence of an object above a defined threshold value.

Applications where one may wish to image at very fast frame rates, or low light levels where dark currents could be significant may also be an area of significant benefit in this system 10 or system 20, respectively. Where dark currents are comparable to the signal events it is possible, through persistence imaging, the extraction of an integrated persisting image from background noise could be possible and this would not be the case for velocity-based trajectory approaches.

Furthermore, this persistence imaging as performed by the system 10 or the system 20, respectively, offers significant advantage where cells do not interact with a surface. In such instances where cells do not interact, the cells require no computational overhead for processing or reconstruction as they do not trigger a positive event on the sensor. In this way, by actively only measuring positive events, the computational overhead can significantly be reduced for samples of low prevalence and, for samples of high prevalence, one needs only to track the cell to the triggering point if or as required.

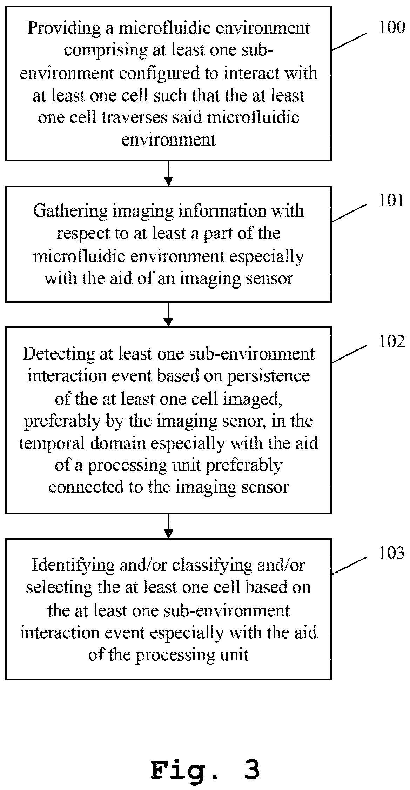

Finally, Fig. 3 shows a flow chart of an embodiment of the method for label-free identification and/or classification and/or selection of at least one cell. It is noted that the method may especially use the system 10 of Fig. 1 or the system 20 of Fig. 2A and 2B, respectively.

In accordance with Fig. 3, a first step 100 comprises providing a microfluidic environment, such as the above-mentioned microfluidic environments 11, 22, comprising at least one sub-environment, such as the above-mentioned sub-environments 12, 23, configured to interact with the at least one cell, such as the above-mentioned cell 21, such that the at least one cell traverses said microfluidic environment.

Furthermore, a second step 101 comprises gathering imaging information with respect to at least a part of the microfluidic environment especially with the aid of an imaging sensor such as the above-mentioned imaging sensor 24.

Moreover, a third step 102 comprises detecting at least one sub-environment interaction event based on persistence of the at least one cell imaged, preferably by the imaging sensor, in the temporal domain especially with the aid of a processing unit, such as the above-mentioned processing unit, preferably connected to the imaging sensor.

As it can further be seen from Fig. 3, a fourth step 103 comprises identifying and/or classifying and/or selecting the at least one cell based on the at least one sub-environment interaction event especially with the aid of the processing unit.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A system (10, 20) for label-free identification and/or classification and/or selection of at least one cell (21), said system (10, 20) comprising:
a microfluidic environment (11, 22) configured to be traversable by the at least one cell (21),
an imaging sensor (24) configured to gather imaging information with respect to at least a part of the microfluidic environment (11, 22), and
a processing unit connected to the imaging sensor (24), wherein the microfluidic environment (11, 22) comprises at least one sub-environment (12, 23) configured to interact with the at least one cell (21),
wherein the processing unit is configured to detect at least one sub-environment interaction event based on persistence of the at least one cell (21) imaged by the imaging sensor (24) in the temporal domain, and
wherein the processing unit is configured to identify and/or classify and/or select the at least one cell (21) based on the at least one sub-environment interaction event.

2. The system (10, 20) according to claim 1,
wherein the at least one sub-environment (12, 23) is at least partly biofunctionalized, and/or
wherein the at least one sub-environment (12, 23) comprises at least one antibody and/or at least one antigen and/or at least one protein and/or at least one aptamer.

3. The system (10, 20) according to claim 1 or 2,
wherein the microfluidic environment (11, 22) and/or the at least one sub-environment (12, 23) comprises or is at least one microfluidic channel and/or at least one microfluidic chamber.

4. The system (10, 20) according to any of the claims 1 to 3,
wherein the at least one sub-environment (12, 23) comprises at least one biofunctionalized surface, and/or
wherein the at least one sub-environment (12, 23) comprises at least one surface coated with at least one antibody and/or at least one antigen and/or at least one protein and/or at least one aptamer.

5. The system (10, 20) according to any of the claims 1 to 4,
wherein the at least one sub-environment (12, 23) comprises at least one element, preferably at least one cylindrical element, more preferably at least one surface obstacle or pillar, most preferably multiple elements and/or cylindrical elements and/or surface obstacles and/or pillars (14a, 14b, 14c, 14d), being biofunctionalized and/or coated with at least one antibody and/or at least one antigen and/or at least one protein and/or at least one aptamer.

6. The system (10, 20) according to any of the claims 1 to 5,
wherein the at least one sub-environment (12, 23) comprises a sub-environment portion (13a) with at least partly biofunctionalization and/or at least one antibody and/or at least one antigen and/or at least one protein and/or at least one aptamer, and
wherein the at least one sub-environment comprises at least one further sub-environment portion (13b) with at least one further at least partly biofunctionalization and/or at least one further antibody and/or at least one further antigen and/or at least one further protein and/or at least one further aptamer.

7. The system (10, 20) according to any of the claims 1 to 6,
wherein the at least one cell (21) comprises or is a subpopulation of cells from a corresponding population sample.

8. The system (10, 20) according to any of the claims 1 to 7,
wherein the persistence comprises or is dwell time of the at least one cell (21) with respect to the microfluidic environment (11, 22) or the at least one sub-environment (12, 23) especially caused by interaction (26) of the at least one cell (21) with the at least one sub-environment (12, 23) .

9. The system (10, 20) according to any of the claims 1 to 8,
wherein the imaging sensor (24) comprises or is an array of pixels, and/or
wherein the processing unit is configured to determine the persistence, especially the dwell time according to claim 8, of the at least one cell (21) by integrating at least one corresponding value, preferably at least one corresponding light intensity, on a single pixel or a cluster of pixels of the imaging sensor (24).

10. The system (10, 20) according to claim 9,
wherein the processing unit is configured to control the respective pixel poll time and/or integration time with respect to the single pixel or the cluster of pixels of the imaging sensor (24).

11. The system (10, 20) according to claim 9 or 10, wherein the processing unit is configured to detect the at least one sub-environment interaction event in the case that the at least one corresponding integrated value, preferably the at least one corresponding integrated light intensity, on the single pixel or the cluster of pixels of the imaging sensor (24) exceeds a defined threshold (25).

12. The system (10, 20) according to any of the claims 1 to 11,
wherein the system (10, 20) is used in the context of microscopy, especially computational microscopy.

13. A method for label-free identification and/or classification and/or selection of at least one cell (21), said method, especially using the system (10, 20) according to any of the claims 1 to 12, comprising the steps of:
providing (100) a microfluidic environment (11, 22) comprising at least one sub-environment (12, 23) configured to interact with the at least one cell (21) such that the at least one cell (21) traverses said microfluidic environment (11, 22),
gathering (101) imaging information with respect to at least a part of the microfluidic environment (11, 22) especially with the aid of an imaging sensor (24),
detecting (102) at least one sub-environment interaction event based on persistence of the at least one cell (21) imaged, preferably by the imaging sensor (24), in the temporal domain especially with the aid of a processing unit preferably connected to the imaging sensor (24), and
identifying and/or classifying and/or selecting (103) the at least one cell (21) based on the at least one sub-environment interaction event especially with the aid of the processing unit.

14. The method according to claim 13,
wherein the persistence comprises or is dwell time of the at least one cell (21) with respect to the microfluidic environment (11, 22) or the at least one sub-environment (12, 23) especially caused by interaction (26) of the at least one cell (21) with the at least one sub-environment (12, 23), and/or
wherein the method further comprises the step of:
determining the persistence, especially said dwell time, of the at least one cell (21) by integrating at least one corresponding value, preferably at least one corresponding light intensity, on a single pixel or a cluster of pixels of the imaging sensor (24) especially with the aid of the processing unit.

15. The method according to claim 14,
wherein the method further comprises the step or steps of:
controlling the respective pixel poll time and/or integration time with respect to the single pixel or the cluster of pixels of the imaging sensor (24) especially with the aid of the processing unit, and/or
detecting the at least one sub-environment interaction event in the case that the at least one corresponding integrated value, preferably the at least one corresponding integrated light intensity, on the single pixel or the cluster of pixels of the imaging sensor (24) exceeds a defined threshold (25) especially with the aid of the processing unit.
